# EUROPÄISCHE PATENTSCHRIFT

(11) **EP 0 988 123 B1**
(45) Veröffentlichungstag und Bekanntmachung des Hinweises auf die Patenterteilung: **29.05.2002**
(21) Anmeldenummer: 97929179.6
(22) Anmeldetag: 12.06.1997
(51) Int. Cl.: B22C 1/00, A61K 7/48, B44C 3/04, A61H 7/00, C04B 26/22, C09K 3/14, C09K 17/40

(54) **STARRER SANDKÖRPER, VERFAHREN ZU DESSEN HERSTELLUNG, DESSEN VERWENDUNG UND VERFAHREN ZUR HERSTELLUNG VON MIT WACHS UMHÜLLTEN SANDKÖRNERN**
RIGID SAND BODY, METHOD FOR PRODUCING THE SAME, USE THEREOF AND METHOD FOR PRODUCING GRAINS OF SAND COATED IN WAX
CORPS EN SABLE RIGIDE, PROCEDE DE PRODUCTION, D'UTILISATION, ET PROCEDE PERMETTANT DE PRODUIRE DES GRAINS DE SABLE ENROBES DE CIRE

(43) Veröffentlichungstag der Anmeldung: 29.03.2000
(73) Patentinhaber: Beermann, Norbert, 80539 München (DE)
(72) Erfinder: Beermann, Norbert, 80539 München (DE)
(74) Vertreter: Merkle, Gebhard
(86) Internationale Anmeldenummer: EP9703082
(87) Internationale Veröffentlichungsnummer: WO9856520

(56) Entgegenhaltungen:
- DE-A- 4 039 244
- DE-A- 19 615 896
- US-A- 3 607 332
- US-A- 4 537 604
- PATENT ABSTRACTS OF JAPAN vol. 009, no. 317 (C-319), 12.Dezember 1985 & JP 60 152407 A (SHISEIDO KK), 10.August 1985,
- PATENT ABSTRACTS OF JAPAN vol. 009, no. 022 (M-354), 30.Januar 1985 & JP 59 169646 A (KUBOTA TEKKO KK), 25.September 1984,

## Beschreibung

Die vorliegende Erfindung betrifft einen starren Sandkörper, ein Verfahren zu dessen Herstellung, dessen Verwendung als Sandreibe für die Hautmassage sowie als Modellier- oder Modellbaukörper sowie ein Verfahren zur Herstellung von diskreten oder agglomerierten, mit einer aus Wachs bestehenden, Noppen aufweisenden Umhüllung versehenen Sandkörnern.

Bisher war es üblich, die Sandfixierung mit Hilfe von giftigen und umweltbelastenden Stoffen, wie beispielsweise Kunstharz oder mit Hilfe von schädlichen Lösungsmitteln, wie Petroleum, Schwerbenzin, Leichtbenzin und Benzol, beispielsweise nach dem Kohlensäureerstarrungsverfahren, durchzuführen.

Die DE 39 30 413 A1 beschreibt ein Poliermittel, das zwingend mindestens 9 Komponenten umfaßt. unter anderem Wachs und Kieselkreide, jedoch auch Petroleum, Testbenzin und Spezialbenzin.

Die DE 29 37 843 B1 beschreibt die Verwendung von Massen aus einem hochmolekularen Bindemittel auf der Basis von Polyvinylchlorid, Celluloseether oder Ceresinwachs, Weichmachern und/oder Lösungsmitteln sowie üblichen Zusätzen als Knet- und Modelliermasse, wobei die Masse als Füllstoff Aluminiumhydroxid enthält. Hierbei war es insbesondere die Aufgabe, eine Knet- und Modelliermasse zu schaffen, die hohe Farbintensität und Farbtreue aufweist.

Die EP 0 590 186 A1 beschreibt einen Kern für das Feingießen von Kohlenstoffstählen nach dem Wachsausschmelzverfahren und vor dem Brennen des Kernes (grüner Kern), der gekennzeichnet ist durch folgende Bestandteile: Quarz mit Körnern von runder oder polyederförmiger Gestalt als Restbestandteil, Zirkon sowie Aluminiumoxid etwa im gleichen Gewichtsprozentanteil wie Zirkon, jedoch geringer als Quarz, als Bindemittel Wachs und im gleichen Gewichtsprozentanteil Stearin. Als Bindemittel werden somit etwa in gleichen Gewichtsprozenten Stearin und Wachs eingesetzt, wobei die unterschiedlichen Eigenschaften von Stearin und Wachs besonders betont werden.

DE-A-4039244 zeigt eine halbflüssige Peeling-Zubereitung, die einzelne mit Wachs überzogene Perlitbruchstücke beinhaltet. Es wird aber kein starrer, abreibfähiger Sandkörper offenbart. Auch soll das Wachs unter 40°C schmelzen, d.h. es muß dem Wachs ein Zusatzstoff begeben sein, da Wachs üblicherweise erst über 40 °C schmilzt.

JP-A-59169646 zeigt einen verlorenen Kern zum Gießen. Ein solcher Kern ist nicht abriebfähig. Der Kern kann u.a. Wachs und u.a. Sand enthalten.

Der Erfindung liegt die Aufgabe zugrunde, einen starren Sandkörper zur Verfügung zu stellen, der in beliebiger Form und Größe erhältlich ist, und welcher keine toxischen und umweltbelastenden Stoffe beinhaltet. Ferner soll ein einfaches und kostengünstiges Verfahren zu dessen Herstellung vorgesehen werden, bei dem ebenfalls keine toxischen und umweltbelastenden Stoffe erforderlich sind.

Diese Aufgabe wird erfindungsgemäß durch einen Sandkörper gemäß Anspruch 1 sowie ein Verfahren gemäß Anspruch 3 gelöst.

Gegenstand der Erfindung ist somit ein starrer Sandkörper, bestehend aus einer Vielzahl von mit einer aus Wachs bestehenden Umhüllung versehenen Sandkörnern, die aneinander haften, wobei der Sandkörper abriebfähig ist.

Gemäß der Erfindung hat sich überraschenderweise gezeigt, daß ein lediglich aus Sand und Wachs bestehender Sandkörper, wobei das Wachs die einzelnen Sandkörner als eine Umhüllung umgibt, in beliebiger Form und Größe zur Verfügung gestellt werden kann und ein Eigenschaftsprofil aufweist, das vielfältige Verwendungsmöglichkeiten des Sandkörpers zuläßt. Durch die aus Wachs bestehende Umhüllung der Sandkörner ist der Sandkörper fixiert. Die Oberfläche des Sandkörpers kann leicht mit Abrieboder Schneidwerkzeugen verändert werden, wobei ein Sandabrieb aus mit Wachs umhüllten Sandkörnern erhalten wird.

Der bei der Erfindung einsetzbare Sand unterliegt keiner besonderen Beschränkung. Die Sandkörnchen weisen üblicherweise einen Durchmesser von 0,06 bis 2 mm auf und werden je nach Korngröße als Feinsand (Äquivalentdurchmesser von üblicherweise 0,06-0,2 mm), Mittelsand (Äquivalentdurchmesser von üblicherweise 0,2-0,63 mm) oder Grobsand (Äquivalentdurchmesser von üblicherweise 0,63-2,0 mm) bezeichnet. Beispielsweise kann Dünensand von Meeresstränden eingesetzt werden, dessen Körnchen üblicherweise einen Durchmesser von etwa 1 mm oder weniger aufweisen.

Auch das bei der Erfindung eingesetzte Wachs unterliegt keiner besonderen Beschränkung, Wachs ist normalerweise bei Raumtemperatur knetbar, über 40°C ohne Zersetzung schmelzend, oberhalb des Schmelztemperaturbereichs verhältnismäßig niedrigviskos und nicht fadenziehend. In der Regel gehen Wachse etwa zwischen 50 und 90°C in den schmelzflüssigen, niedrigviskosen Zustand über. Für die erfindungsgemäßen Zwecke eigenen sich natürliche, chemisch modifizierte als auch synthetische Wachse.

Beispiele für natürliche Wachse sind pflanzliche Wachse, wie Candelilawachs, Carnaubawachs, Japanwachs, Espartograswachs, Korkwachs, Guarumawachs, Reiskeimölwachs, Zuckerrohrwachs, Ouricurywachs und Montanwachs, tierische Wachse, wie Bienenwachs, Schellackwachs, Walrat und Lanolin, Mineralwachse, wie Ceresin und Ozokerrit beziehungsweise Erdwachs, petrochemische Wachse, wie Petrolatum, Paraffinwachse und Mikrowachse.

Beispiele chemisch modifizierter Wachse sind Hartwachse, wie Montanesterwachse, Sasolwachse und hydrierte Jojobawachse.

Beispiele synthetischer Wachse sind Polyalkylenwachse und Polyethylenglykolwachse.

Für bestimmte Anwendungen der erfindungsgemäßen Sandkörper sind natürliche Wachse, wie Bienenwachs, besonders bevorzugt. Falls erwünscht, können die Wachse auch eingefärbt odermit Duftstoffen versetzt werden.

Gegenstand der Erfindung ist weiterhin ein Verfahren zur Herstellung des oben erwähnten Sandkörpers, das dadurch gekennzeichnet ist, daß man Sandkörner und Wachs getrennt voneinander auf eine Temperatur von 50-90°C, vorzugsweise 60-90°C, erwärmt, die erwärmten Sandkörner und das erwärmte, flüssige Wachs zusammenfügt und die erhaltene Masse zur Verfestigung abkühlen läßt.

Das erfindungsgemäße Verfahren ermöglicht es somit, ohne Verwendung von Kunstharzen und irgendwelcher Lösungsmittel, alleine durch Energiezuführung den Sand zu fixieren. Das Volulmenverhältnis von Sand zu Wachs kann hierbei geeigneterweise etwa 4:1, entsprechend einem Gewichtsverhältnis von etwa 8:1 betragen, wobei dieses Verhältnis beispielsweise mit Hilfe von Preßluftpumpen sogar auf etwa 16:1 erhöht werden könnte.

Gemäß einer bevorzugten Ausführungsform führt man das Zusammenfügen in der Weise durch, daß man das erwärmte, flüssige Wachs auf eine Schicht aus erwärmten Sandkörnern gießt. Hierbei versickert das flüssige Wachs im heißen Sand wie Wasser. Bei normalen Sandtemperaturen von 20 bis 30°C würde dahingegen das flüssige Wachs nicht eindringen können. Nach dem Einsickern des flüssigen Wachses können dann in der Phase der Abkühlung mit technischen Hilfsmitteln große und kleine Sandkörper geformt werden. Dies erfolgt geeigneterweise dadurch, daß man die erhaltene Masse vor der Abkühlung in eine Form preßt. Alternativ kann die Herstellung der erfindungsgemäßen Sandkörper auch in der Weise erfolgen. daß erhitzter Sand in eine erwünschte Form gegeben oder der Sand in der Form erhitzt und das erwärmte, flüssige Wachs auf die erwärmten Sandkörner gegossen wird. Nach der Abkühlung sind diese Sandkörper fixiert und zeigen an der Oberfläche bei Berührung einen leichten Sandabrieb, das heißt sie sind abriebfähig, Aufgrund dieser Abriebfähigkeit kann nun der abgekühlte, starre Sandkörper mit technischen Hilfsmitteln leicht bearbeitet werden. Ebenso läßt sich die Form des Sandkörpers durch Abriebwerkzeuge leicht verändern.

Durch erneutes Aufweichen mittels Hitzezuführung von einzelnen Flächen des bereits abgekühlten Sandkörpers können andere Sandkörper an diese erhitzten Flächen angekoppelt werden, vorausgesetzt daß auch bei dem zweiten Sandkörper die anzubindende Fläche aufgeweicht und erhitzt wurde.

Das erfindungsgemäße Verfahren ist unter ökologischen Gesichtspunkten sowie unter dem Gesichtspunkt der Kostenersparnis besonders vorteilhaft, da die Sandfixierung je nach geographischer Lage alleine mittels Sonnenenergie durchgeführt werden kann.

Für die erfindungsgemäßen Zwecke eignet sich, wie oben erwähnt, feinkörniger Sand, wie er beispielsweise als Dünensand an Meeresküsten vorkommt. Dieser besitzt üblicherweise einen Durchmesser von ca. 1 mm oder weniger und schimmert in trockenem Zustand unter dem Mikroskop in allen Farben. Beispielsweise bei einem hellen Dünensand aus der Camarque überwiegen die weißen Farben als auch durchsichtige Kristallkörner. Vereinzelt kann man auch braune und schwarze Sandkörner beobachten. Fast alle Formen der Körner sind abgerundet, wobei es sich jedoch nicht um Kugeln, sondern um kleine Quader bzw. Polyeder handelt. Es sind jedoch auch viele längliche Körper zu beobachten.

Die mit Wachs umhüllten Sandkörner des erfindungsgemäßen fixierten Sandkörpers schimmern ebenfalls unter dem Mikroskop in allen Farben, glänzen jedoch nun weit stärker. Selbst braune und dunkle Sandkörner zeigen nach der Beschichtung einen schimmernden Glanz, im Gegensatz zum reinen Sand. Dieser starke Glanz rührt von der Wachsbeschichtung der einzelnen Sandkörner her. Weiterhin kann unter dem Mikroskop festgestellt werden, daß sich an etlichen Sandkörnern weiße oder gar durchsichtige, lange Noppen aus Wachs befinden. Diese ragen zum Teil in die Hohlräume hinein und bilden die Brücken zwischen den Sandkörnern. Jedoch sind die meisten Sandkörner so eng aneinandergepreßt, daß man diese Noppen nicht mehr erkennen kann.

Da die fixierten Sandkörper abriebfähig sind, ergibt sich nach demAbkratzen des fixierten Sandkörpers ein anderes Oberflächenbild. Unter dem Mikroskop sieht man nun wiederum die umhüllten Sandkörner in allen Farben schimmern, jedoch sind die großen, vereinzelten Noppen verschwunden. Statt dessen sind auf jedem Sandkorn sehr viele kleine Noppen zu sehen. Ohne an eine Theorie gebunden zu sein, wird angenommen, daß die einzelnen Sandkörner des erfindungsgemäßen Sandkörpers über unzählige Wachsbrücken beziehungsweise -noppen miteinander verbunden sind, und der Sandkörper dadurch insgesamt eine große Festigkeit erhält.

Gegenstand der Erfindung ist weiterhin ein Verfahren zur Herstellung von diskreten oder agglomerierten, mit einer aus Wachs bestehenden, Noppen aufweisende Umhüllung versehenen Sandkörnern durch Abreiben des erfindungsgemäßen Sandkörpers.

Durch einen solchen Abrieb vom Sandkörper entsteht ein neuartiger Abrieb- beziehungsweise Bröselsand aus mit Wachs umhüllten Sandkörnern. Meistens hängen hierbei 5-10 umhüllte Sandkörner zusammen, die trotz des Abreibens vom Sandkörper weiterhin miteinander verklebt sind. Unter dem Mikroskop ist zu sehen, daß von diesen umhüllten Sandkörnern Brücken beziehungsweise Noppen in alle Richtungen gehen. Über diese Noppen können sie mit anderen umhüllten Sandkörnern wieder leicht verbunden werden. Dies geschieht durch einfaches Zusammenpressen der umhüllten Sandkörner, selbst in abgekühltem Zustand. Erfindungsgemäß wird somit in bisher nicht bekannter Weise ein selbstklebender Sand zur Verfügung gestellt.

Auf diese Weise zusammengepreßte, umhüllte Sandkörner zeigen nun unter dem Mikroskop ein anderes Oberflächenbild. Man erkennt nur noch andeutungsweise die Sandkörner, Hohlräume zwischen ihnen sind nicht mehr festzustellen, große Noppen auf den Körnern sind ebenfalls nicht mehr zu erkennen, sondern man sieht überwiegend die durchsichtige Wachsumhüllung. Die gesamte Oberfläche ist mit hauchdünnerwachsbeschichtung fest verklebt, das heißt alle Sandkörner sind fest an der Oberfläche miteinander verbunden. Dadurch kann kein Sandkorn mehr aus der Oberfläche herausbrechen und die Abriebfähigkeit ist verlorengegangen beziehungsweise stark eingeschränkt.

Die erfindungsgemäßen, starren Sandkörper eröffnen vielfältige Verwendungsmöglichkeiten, Gemäß einem Aspekt der Erfindung werden die erfindungsgemäßen Sandkörper als Sandreibe für die Hautmassage verwendet. Aufgrund der körnigen Struktur des fixierten Sandkörpers und seiner Abriebfähigkeit sowie der polsterähnlichen Wachsumhüllung jedes einzelnen Sandkorns gleitet die Sandreibe über die Haut, ohne diese zu verletzen. Abgestorbene Hautpartikelchen werden hierbei mitgenommen und die Haut von unerwünschten Hautschuppen befreit. Diese bleiben zum Teil an der Sandreibe oder an dem Abriebsand kleben, der auf der Haut liegenbleibt. Da die mit Wachs umhüllten Sandkörner neben derKlebeeigenschaft auch eine hervorragende Gleitfähigkeit haben, können nach der Körpermassage alle Sandreste mit einem trockenen Tuch durch Abwischen entfernt werden. Ein weiterer Effekt der Hautmassage mit der Sandreibe besteht darin, daß die junge Haut nicht nur von Hautschuppen befreit, sondern auch gleichzeitig durchblutet wird. Je länger die Massage andauert, desto mehr verklebt die Sandreibe, teils durch die Hautschuppen, teils durch die durch Reibung erzeugte Wärme. Daher empfiehlt es sich, die Sandreibe von Zeit zu Zeit an der Oberfläche zu erneuern, beispielsweise durch Abkratzen mittels eines Messers. Danach ist die Sandreibe wieder voll einsatzfähig.

Ein weiterer Vorteil gegenüber bisherigen Hautmassageverfahren liegt darin, daß keine Cremes, Lotionen oder Gele verwendet werden müssen, sondern die Haut völlig trocken bleibt, was bei empfindlicher Haut sehr erwünscht ist. Eine nachträgliche Reinigung mit Wasser ist ebenfalls nicht nötig. Bei der Sandreibe wird als Wachs vorzugsweise Bienenwachs eingesetzt, so daß die Sandreibe nur aus natürlichen Stoffen besteht.

Gemäß einem weiteren Aspekt der Erfindung wird der erfindungsgemäße Sandkörper als Modellier- oder Modellbaukörper verwendet. Durch die leichte Bearbeitbarkeit der Sandkörper können hierbei mit sehr geringem Zeit-, Energie- und Kostenaufwand beliebige Figuren oder Modellbauten, wie Statuen, Skulpturen, Kugeln, Vasen, Teller, Schüsseln oder Prothesen hergestellt werden, die in ihrer Härte Sandsteinkörpern ähneln, aber um ein vielfaches leichter zu bearbeiten sind. Besonders vorteilhaft ist, daß hierbei alle bei der Bearbeitung anfallenden Abfälle wieder leicht eingeschmolzen werden können, und zwar auch mit Sonnenenergie, ebenso alle nicht mehr gebrauchten Figuren. Sie stehen somit als Ausgangsmaterial für neue Figuren und neue Produkte zur Verfügung, wie zur Materialverwendung beim Anlegen von Gartenteichen, der Beschichtung von Tennisplätzen, Bobbahnen oder zur Beschichtung von Schlittschuhplätzen.

Wie bereits oben erwähnt, können durch Abreiben des erfindungsgemäßen Sandkörpers diskrete oder agglomerierte, mit einer aus Wachs bestehenden, Noppen aufweisende Umhüllung versehenen Sandkörner hergestellt werden. Diese umhüllten Sandkörner eignen sich sehr gut als Gleitund Rutschunterlagen, als Füllmaterial von Ritzen oder Löchern, oder als Polstermaterial in Weitsprunggruben. Da diese präparierten Sandkörner aufgrund der Wachsumhüllung wasserabstoßend sind, eignen sie sich auch zum Abdecken von Materialien im Freien.

Die Erfindung wird anhand der folgenden Ausführungsbeispiele näher erläutert.

### Beispiel 1: Die Sandreibe als Hautmassagegerät

Die fixierten Sandkörper werden noch in der erhitzten Phase in seifengroße Gußformen gepreßt und dabei in Aluminiumfolie eingewickelt. Nach dem Erkalten wird die Aluminiumfolie abgezogen und die Sandreibe an der Oberfläche mit einem Messer einsatzfähig gerieben, das heißt sie wird aufgerauht.

### Beispiel 2: Herstellung einer Skulptur oder eines Modellbaukörpers

Die fixierten Sandkörper werden noch in der erhitzten Phase in eine mit Aluminiumfolie ausgelegte Gußform gepreßt, deren Ausmaße größer sind als diejenigen des herzustellenden Modellbaukörpers oder der herzustellenden Skulptur. Nach dem Erkalten wird der erstarrte Sandkörper aus der Gußform herausgeklopft und die Aluminiumfolie wird abgezogen beziehungsweise abgekratzt. Der Sandkörper kann nun mit Werkzeugen leicht bearbeitet werden.

Bei der Massenproduktion von Modellbaukörpern wird eine Gußform verwendet, die bereits in der Formgestaltung und den Ausmaßen ungefähr dem herzustellenden Modellbaukörper oder der herzustellenden Skulptur entspricht. Die Verwendung einer Aluminiumfolie ist hierbei nicht unbedingt erforderlich. Zur Erleichterung der Loslösung des Sandkörpers aus der Gußform können die Außenwände der Gußform leicht erwärmt werden. Hierdurch gelingt es, den vorgeformten Sandkörper leicht aus der Form zu entnehmen, ohne an diese klopfen zu müssen.

### Beispiel 3: Herstellung von umhülltem Abriebsand

Die fixierten Sandkörper werden noch in der erhitzten Phase in mit Aluminiumfolie ausgelegte Gußformen, die hinsichtlich den Ausmaßen Blumenkästen ähneln, gepreßt. Nach dem Erkalten werden die erstarrten Sandkörperblöcke aus der Gußform herausgeklopft und gestapelt.

Die erstarrten Sandkörperblöcke, welche abriebfähig sind, werden mit Werkzeugen oder Maschinen so bearbeitet, daß mit Wachs umhüllter Abriebsand kontinuierlich abgerieben wird, bis zur völligen Auflösung der einzelnen Sandkörperblöcke. Eventuell verbleibende Rest der Blöcke können zur erneuten Herstellung von Sandkörpern wiederverwendet werden.

Der so erhaltene, umhüllte Abriebsand kann bis zum Abtransport zu den gewünschten Einsatzorten, wie überdachte, künstliche Snowboard-Pisten, Skipisten und Langlaufloipen oder zu Baustellen für Ausbesserungsarbeiten, in Hallen gelagert werden.

## Patentansprüche

1. Starrer Sandkörper, bestehend aus einer Vielzahl von mit einer aus Wachs bestehenden Umhüllung versehenen Sandkörnern, die aneinander haften wobei der Sandkörper abriebfähig ist.

2. Sandkörper nach Anspruch 1, wobei die Sandkörner einen Durchmesser von 0,6-2mm, vorzugsweise etwa 1 mm oder weniger aufweisen.

3. Verfahren zur Herstellung eines Sandkörpers nach Anspruch 1 oder 2, **dadurch gekennzeichnet, daß** man Sandkörner und Wachs getrennt voneinander auf eine Temperatur von 50-90°C erwärmt, die erwärmten Sandkörner und das erwärmte, flüssige Wachs zusammenfügt und die erhaltene Masse zur Verfestigung abkühlen läßt.

4. Verfahren nach Anspruch 3, **dadurch gekennzeichnet, daß** man das Zusammenfügen in der Weise durchführt, daß man das erwärmte, flüssige Wachs auf eine Schicht aus erwärmten Sandkörnern gießt.

5. Verfahren nach Anspruch 3 oder 4, **dadurch gekennzeichnet, daß** man die erhaltene Masse vor der Abkühlung in eine Form preßt.

6. Verwendung eines Sandkörpers nach Anspruch 1 oder 2 als Sandreibe für die Hautmassage.

7. Verwendung eines Sandkörpers nach Anspruch 1 oder 2 als Modellieroder Modellbaukörper.

8. Verfahren zur Herstellung von diskreten oder agglomerierten, mit einer aus Wachs bestehenden, Noppen aufweisende Umhüllung versehenen Sandkörnern durch Abreiben des Sandkörpers nach Anspruch 1 oder 2.

## Claims

1. Rigid sand body consisting of a plurality of sand grains provided with a coating consisting of wax, which adhere to one another, wherein the sand body is abradable.

2. Sand body according to claim 1, wherein the sand grains have a diameter of 0.6-2 mm, preferably about 1 mm or less.

3. Process for preparing a sand body according to claim 1 or 2, **characterised in that** sand grains and wax are heated separately from one another at a temperature of 50-90°C, the heated sand grains and the heated, liquid wax are added together and the composition obtained is allowed to cool for solidification.

4. Process according to claim 3, **characterised in that** the adding together is carried out such that the heated, liquid wax is cast on a layer of heated sand grains.

5. Process according to claim 3 or 4, **characterised in that** the composition obtained is pressed into a mould before cooling.

6. Use of a sand body according to claim 1 or 2 as a sand scrub for skin massage.

7. Use of a sand body according to claim 1 or 2 as a modelling or model component.

8. Process for producing discrete or agglomerated sand grains provided with a coating having burls consisting of wax by abrading the sand body according to claim 1 or 2.

## Revendications

1. Corps en sable rigide, constitué de multiples grains de sable munis d'un enrobage constitué de cire et qui adhèrent les uns aux autres, de sorte que le corps en sable est susceptible d'abrasion.

2. Corps en sable selon la revendication 1, dans lequel les grains de sable présentent un diamètre de 0,6 à 2 mm, de préférence environ 1 mm ou moins.

3. Procédé pour la fabrication d'un corps en sable selon la revendication 1 ou 2, **caractérisé en ce que** l'on chauffe des grains de sable et de la cire séparément l'un de l'autre à une température de 50 à 90° C, on rassemble les grains de sable chauffés et la cire chauffée, liquide, et on laisse refroidir la masse obtenue pour sa solidification.

4. Procédé selon la revendication 3, **caractérisé en ce qu'**on exécute l'étape de rassembler en versant la cire chauffée, liquide, sur une couche de grains de sable chauffés.

5. Procédé selon la revendication 3 ou 4, **caractérisé en ce qu'**on presse la masse obtenue dans un moule avant refroidissement.

6. Utilisation d'un corps en sable selon la revendication 1 ou 2, comme gomme en sable pour le massage de la peau.

7. Utilisation d'un corps en sable selon la revendication 1 ou 2, comme corps de modelage ou de construction de maquette.

8. Procédé pour fabriquer des grains de sable distincts ou agglomérés, munis d'un enrobage constitué de cire présentant des nopes, par abrasion du corps en sable selon la revendication 1 ou 2.
